(19) **Europäisches Patentamt**

**European Patent Office**

**Office européen des brevets**

(11) **EP 1 316 971 A2**

(12) **EUROPEAN PATENT APPLICATION**

| | |
|---|---|
| (43) Date of publication:<br>**04.06.2003 Bulletin 2003/23** | (51) Int Cl.[7]: **G21K 4/00** |

(21) Application number: **02102524.2**

(22) Date of filing: **04.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(30) Priority: **03.12.2001 EP 10006971**<br><br>(71) Applicant: **AGFA-GEVAERT**<br>**2640 Mortsel (BE)** | (72) Inventors:<br>• **Joly, Ludo**<br> **2640 Mortsel (BE)**<br>• **Leblan, Paul**<br> **2640 Mortsel (BE)**<br>• **Struye, Luc**<br> **2640 Mortsel (BE)** |

(54) **A binderless phosphor screen on a support coloured with a pigment mixture**

(57)    A binderless stimulable phosphor screen comprising a phosphor layer with needle-shaped phosphor crystals on a support absorbing at least 30 % of the stimulating light and reflecting at least 60 % of the stimulated light. The support can be a PET support including a mixture of blue and white pigments.

EP 1 316 971 A2

Printed by Jouve, 75001 PARIS (FR)

## Description

FIELD OF THE INVENTION

The present invention relates to a binderless storage phosphor screen with needle shaped phosphors.

BACKGROUND OF THE INVENTION

A well known use of storage phosphors is in the production of X-ray images. In US-A-3 859 527 a method for producing X-ray images with a photostimulable phosphor, which are incorporated in a panel, is disclosed. The panel is exposed to incident pattern-wise modulated X-ray beam and as a result thereof the phosphor temporarily stores energy contained in the X-ray radiation pattern. At some interval after the exposure, a beam of visible or infra-red light scans the panel in order to stimulate the release of stored energy as light that is detected and converted to sequential electrical signals which are processed to produce a visible image. For this purpose the phosphor should store as much as possible of the incident X-ray energy and emit as little as possible of the stored energy until stimulated by the scanning beam. This is called "digital radiography" or "computed radiography".

The image quality that is produced by any radiographic system using a phosphor screen, thus also by a digital radiographic system, largely depends on the construction of the phosphor screen. In general the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced e.g. by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when phosphor crystals with high crystal symmetry and simple chemical composition are used.

The use of alkali metal halide phosphors in storage screens or panels is well known in the art of storage phosphor radiology and the high crystal symmetry of these phosphors makes it possible to provide structured screens and binderless screens.

It has been disclosed that when binderless screens with an alkali halide phosphors are produced it is beneficial to have the phosphor crystal deposited as some kind of piles, needles, tiles, etc.. In US-A-4 769 549 it has been disclosed that the image quality of a binderless phosphor screen can be improved when the phosphor layer has a block structure shaped in fine pillars. In US-A-5 055 681 a storage phosphor screen comprising an alkali halide phosphor in a pile-like structure has been disclosed. The image quality of such screens needs still to be increased and in JP-A-06/230 198 it is disclosed that the surface of the screen with pillar like phosphors is rough and that a levelling of that surface can increase the sharpness. In US-A-5 874 744 attention is drawn to the index of refractivity of the phosphor used to produce the storage phosphor screen with needle-like or pillar-like phosphors.

In EP-A-1 113 458 a binderless storage phosphor screen has been disclosed that comprises an alkali metal storage phosphor characterised in that said screen shows an XRD-spectrum with a (100) diffraction line having an intensity $I_{100}$ and a (110) diffraction line having an intensity $I_{110}$, so that $I_{100}/I_{110} \geq 1$. Such a phosphor screen shows a better compromise between speed and sharpness.

Although all screens disclosed in this prior art can yield X-ray images with good quality, the need for a better compromise between speed of the recording system (i.e. as low as possible a patient dose) and an image with high sharpness and low noise is still there.

OBJECTS AND SUMMARY OF THE INVENTION

It is an object of the present invention to provide a stimulable phosphor screen useful in an X-ray recording system with a very good compromise between speed of the recording system (i.e. as low as possible patient dose) and an image with high sharpness and low noise.

The above mentioned object has been realised by providing a stimulable phosphor screen having the specific features defined in claim 1. Specific features for preferred embodiments of the invention are disclosed in the dependent claims.

Further advantages and embodiments of the present invention will become apparent from the following description and drawings.

DETAILED DESCRIPTION OF THE INVENTION

It has been known in the art of the manufacture of storage screens, wherein storage phosphors are dispersed in a binder, to colour the screen for increasing sharpness. So e.g. in US-A-4 394 581 and US-A-4 491 736 such screens are disclosed. In US-A-4 618 778 it has also been disclosed to add a reflecting layer between the support and the layer containing the phosphor dispersed in a binder. In US-A-4 769 549 and US-A-4 963 751 wherein storage phosphor screens with binderless, vapour deposited phosphor layers are disclosed, it is suggested that in such screens the compromise between speed and sharpness is so good, that it is not required to include special measures for further increasing the compromise between sharpness and speed. It has now, surprisingly, been found that even with binderless stimulable phosphor screens with vapour deposited phosphors, already showing high speed combined with high sharpness, a better speed/sharpness compromise could be reached when the screen comprised a support absorbing at least 30 % of the stimulating light and reflecting at least 60 % of the stimulated light. Preferably the support absorbs at least 75 % of the stimulating light and reflects at least 75 % of the stimulated light.

By "vapour deposited phosphor" is, throughout this text, meant a phosphor that is produced by any method selected from the group consisting of thermal vapour deposition, chemical vapour deposition, electron beam deposition, radio frequency deposition and pulsed laser deposition. This vapour deposition is preferably carried out under conditions as described in EP-A-1 113 458.

Preferred supports for a storage phosphor screen of the present invention are selected from the group consisting of ceramics, glass and polymeric film. Of those polymeric film is the most preferred. Especially heat stable polyester films ( as e.g. polyethylene terephthalate and polyethylene naphthalate) with a thickness between 100 and 1000 $\mu$m are preferred as support in a screen according to this invention. In order to reach the desired absorption and reflection properties, the supports, used in screens of the present invention, are treated in the bulk of it, so that no special layers have to be coated on the supports before the vapour deposition of the needle-shaped phosphors. The treatment of the bulk of the support preferably consists in incorporating into the bulk of the support a white pigment and a pigment absorbing light of a wavelength above 600 nm. Useful white pigments are e.g. $TiO_2$, $ZnS$, $Al_2O_3$, $MgO$ and $BaSO_4$, without however being limited thereto. $TiO_2$ in anatase crystal form is a preferred white pigment for use in supports for phosphor screens according to the present invention. Useful blue pigments are organic pigments as e.g. ZAPON FAST BLUE 3G (manufactured by Hoechst AG.), ESTROL BRILL BLUE N-3RL (manufactured by Sumitomo Kagaku Co., Ltd.), SUMIACRYL BLUE F-GSL (manufactured by Sumitomo Kagaku Co., Ltd.), D & C BLUE NO. 1 (manufactured by National Aniline Co., Ltd.), SPIRIT BLUE (manufactured by Hodogaya Kagaku Co., Ltd.), OIL BLUE NO. 603 (manufactured by Orient Co., Ltd.), KITON BLUE A (manufactured by Ciba Geigy AG.), AIZEN CATHILON BLUE GLH (manufactured by Hodogaya Kagaku Co., Ltd.), LAKE BLUE A.F.H. (manufactured by Kyowa Sangyo Co., Ltd.), RODALIN BLUE 6GX (manufactured by Kyowa Sangyo Co., Ltd.), PRIMOCYANINE 6GX (manufactured by Inahata Sangyo Co., Ltd.), BRILLACID GREEN 6BH (manufactured by Hodogaya Kagaku Co., Ltd.), CYANINE BLUE BNRS (manufactured by Toyo Ink Co., Ltd.), LIONOL BLUE SL (manufactured by Toyo Ink Co., Ltd.), and MACROLEX BLUE (trade name of Bayer AG, Leverkusen), without however being limited thereto.

Inorganic colourants which can be employed in the radiation image storage panel of the present invention include ultramarine blue, cobalt blue, cerulean blue, chromium oxide, pigment of $TiO_2$--$ZnO$--$CoO$--$NiO$ system, again without being limited thereto. Commercially available, very useful blue and blue green inorganic pigments are ceramic pigments as e.g. blue or blue-green pigments chosen from the series of SICOCER A, SICOCER B, SICOCER E, SICOCER F, SICOCER G, SICOCER I, SICOCER P, SICOCER R, SICOCER S, SICOCER U, all sold by BASF, Ludwigshafe, Germany.

When the support for use in a storage phosphor screen of the present invention is glass, it is preferred to use frit glass made by heating glass particles or fibres at high enough a temperature in order to fuse them together in a manner, sufficiently to form a plate. The surface of such a plate of frit glass is uneven and the profile depends on the diameter of the glass beads used to form the plate of frit glass. An unevenness in a support for vapour depositing a phosphor, as such, is quite desirable, because it helps to vapour deposit the phosphor crystals in needle-shaped form. The pigments used in the bulk of the glass are, in the context of the present invention, preferably inorganic white and blue pigments.

A binderless phosphor screen according to the present invention can be prepared by vacuum deposition of the phosphor crystals on the substrate as well as by combining (mixing) the ingredients for the phosphor (phosphor precursors) and then evaporating this mixture in order to have the phosphor formed in situ during evaporation.

According to the present invention it is further preferred to provide a binderless stimulable phosphor screen on a polymeric film as a substrate, wherein said polymeric film has a surface that has been subjected to embossing for forming a fine concavo-convex pattern.

The phosphor in a binderless phosphor screen according to the present invention can be any stimulable metal phosphor known in the art. Preferably the storage phosphor used in binderless phosphor screens of the present invention is an alkali metal phosphor.

Very suitable phosphors are, e.g., phosphors according to the formula I :

$$M^{1+}X.aM^{2+}X'_2bM^{3+}X''_3:cZ \qquad (I)$$

wherein:

$M^{1+}$ is at least one member selected from the group consisting of Li, Na, K, Cs and Rb,
$M^{2+}$ is at least one member selected from the group consisting of Be, Mg, Ca, Sr, Ba, Zn, Cd, Cu, Pb and Ni,
M is at least one member selected from the group consisting of Sc,

Y, La, Ce, Pr, Nd, Pm, Sm, Eu, Gd, Tb, Dy, Ho, Er, Tm, Yb, Lu, Al, Bi, In and Ga,

Z is at least one member selected from the group $Ga^{1+}$, $Ge^{2+}$, $Sn^{2+}$,

$Sb^{3+}$ and $As^{3+}$, X, X' and X'' can be the same or different and each represents a halogen atom selected from the group consisting of F, Br, Cl, I and $0 \leq a \leq 1$, $0 \leq b \leq 1$ and $0 < c \leq 0.2$. Such phosphors have been disclosed in, e.g., US-A-5 736 069.

Highly preferred phosphors for use in a binderless phosphor screen of the present invention are CsX:Eu stimulable phosphors, wherein X represents a halide selected from the group consisting of Br and Cl prepared by a method comprising the steps of : - mixing said CsX with an amount of between $10^{-3}$ and 5 mole % of a Europium compound selected from the group consisting of $EuX'_2$, $EuX'_3$ and EuOX', X' being a member selected from the group consisting of F, Cl, Br and I;

- firing said mixture at a temperature above 450°C;
- cooling said mixture and
- recovering the CsX:Eu phosphor.

Most preferably a CsBr:Eu stimulable phosphor is used, wherein said phosphor is prepared by the method comprising the steps of :

- mixing said CsX with an amount of between 10 and 5 mole % of a Europium compound selected from the group consisting of EuX'2, EuX'3 and EuOX', X' being a member selected from the group consisting of F, Cl, Br and I;
- firing said mixture at a temperature above 450 °C;
- cooling said mixture and
- recovering the CsX:Eu phosphor.

The binderless screen can be prepared by bringing the finished phosphor on the support by any method selected from the group consisting of thermal vapour deposition, chemical vapour deposition, electron beam deposition, radio frequency deposition and pulsed laser deposition. It is also possible to bring the alkali metal halide and the dopant together and depositing them both on the support in such a way that the alkali metal phosphor is doped during manufacturing the screen.

Thus the present invention encompasses a method for manufacturing a phosphor screen containing a CsX:Eu stimulable phosphor, wherein X represents a halide selected from the group consisting of Br and Cl comprising the steps of :

- bringing multiple containers of said CsX and a Europium compound selected from the group consisting of EuX'2, EuX'3 and EuOX', X' being a halide selected from the group consisting of F, Cl, Br and I in condition for vapour deposition and

- depositing, by a method selected from the group consisting of thermal vapour deposition, chemical vapour deposition, electron beam deposition, radio frequency deposition and pulsed laser deposition, both said CsX and said Europium compound on a substrate in such a ratio that on said substrate a CsX phosphor, doped with an amount between $10^{-3}$ and 5 mole % of Europium, is formed.

The deposition can proceed from a single container containing a mixture of the starting compounds in the desired proportions. Thus the method further encompasses a method for manufacturing a phosphor screen containing a CsX:Eu stimulable phosphor, wherein X represents a halide selected from the group consisting of Br and Cl comprising the steps of :

- mixing said CsX with an amount between $10^{-3}$ and 5 mole % of a Europium compound selected from the group consisting of $EuX'_2$, $EuX'_3$ and EuOX', X' being a halide selected from the group consisting of F, Cl, Br and I;
- bringing said mixture in condition for vapour deposition and
- depositing said mixture on a substrate by a method selected from the group consisting of physical vapour deposition, thermal vapour deposition, chemical vapour deposition, electron beam deposition, radio frequency deposition and pulsed laser deposition.

## Claims

1. A binderless stimulable phosphor screen comprising a vapour deposited phosphor layer on a support absorbing at least 30 % of the stimulating light and reflecting at least 60 % of the stimulated light.

2. A binderless stimulable phosphor screen according to claim 1, wherein said support is selected from the group consisting of ceramics, glass and polymeric films.

3. A binderless stimulable phosphor screen according to claim 2, wherein said support is a polymeric film coloured with pigments.

4. A binderless stimulable phosphor screen according to claim 2, wherein said polymeric film is a PET film comprising $TiO_2$ and MACROLEX BLUE.

5. A binderless stimulable phosphor screen according to claim 3 or 4, wherein said polymeric film has a surface that has been subjected to embossing for forming a fine concavo-convex pattern.

6. A binderless phosphor screen according to any of claims 1 to 5, wherein said vapour deposited phosphor is a needle-shaped phosphor.

7. A binderless stimulable phosphor screen according to any one of the claims 1 to 6, wherein said needle-shaped phosphor crystals are crystals of an alkali metal phosphor.

8. A binderless stimulable phosphor screen according to claim 7, wherein said alkali metal phosphor is a CsX:Eu stimulable phosphor, wherein X represents a halide selected from the group consisting of Br and Cl, said phosphor being prepared by a method comprising the steps of :

   - mixing said CsX with an amount between $10^{-3}$ and 5 mole % of a Europium compound selected from the group consisting of $EuX'_2$, $EuX'_3$ and $EuOX'$, X' being a member selected from the group consisting of F, Cl, Br and I,
   - firing said mixture at a temperature above 450°C
   - cooling said mixture and
   - recovering the CsX:Eu phosphor.